# FASCICULE DE BREVET EUROPEEN

(11) **EP 1 099 396 B1**
(45) Date de publication et mention de la délivrance du brevet: **11.05.2005**
(21) Numéro de dépôt: 00402971.6
(22) Date de dépôt: 26.10.2000
(51) Int. Cl.: A47C 7/50, A47C 1/034

(54) **Repose-jambes escamotable pour siège**
Einziehbare Beinstütze für einen Sitz
Retractable legrest for seat

(30) Priorité: 05.11.1999 FR 9913893
(43) Date de publication de la demande: 16.05.2001
(73) Titulaire: Prieur, Roger, 19270 Ussac (FR)
(72) Inventeur: Prieur, Roger, 19270 Ussac (FR)
(74) Mandataire: Sauvage, Renée

(56) Documents cités:
- WO-A-97/00035
- WO-A-99/25222
- BE-A- 558 830
- US-A- 5 352 020
- PATENT ABSTRACTS OF JAPAN vol. 016, no. 572 (C-1010), 11 décembre 1992 (1992-12-11) & JP 04 224711 A (AISIN SEIKI CO LTD), 14 août 1992 (1992-08-14)

## Description

La présente invention a pour objet un repose-jambes adapté à être monté sous l'assise d'un siège et à passer d'une position escamotée dans laquelle ledit repose-jambes permet à l'utilisateur du siège d'être assis pieds au sol et une position déployée dans laquelle le repose-jambes s'étend dans le prolongement de l'assise pour recevoir les jambes de l'utilisateur en position de relaxation.

Il est connu, d'après WO 97/00035, un siège comportant un repose-jambes constitué (a) d'un tube 21 ayant une extrémité distale ouverte et une extrémité proximale au voisinage de laquelle ledit tube est monté pivotant sous l'assise du siège, une face dudit tube, appelée à être orientée vers le haut en position déployée du repose-jambes, supportant un coussin 6'' ; et (b) d'une tige 22 montée coulissante dans ledit tube entre une position dans laquelle elle est escamotée dans ce dernier et une position dans laquelle elle se projette hors dudit tube par l'extrémité distale de celui-ci, ladite tige supportant un coussin 6''' sur une face appelée à être orientée vers le haut en position déployée du repose-jambes et une roue 23 ou une paire de roues.

Le déploiement du repose-jambes de WO 97/00035 est un système impliquant l'inclinaison du dossier (1) qui entraîne le déplacement d'une pièce coulissante (15) puis l'actionnement d'un vérin (13) et enfin le déploiement du repose-jambes (6). Ce système de déploiement est donc complexe.

Dans le cadre de la présente description et des revendications, les adjectifs "proximal" et "distal" sont respectivement utilisés pour distinguer une pièce ou zone plus proche de l'assise du siège d'une pièce ou zone plus éloignée.

La présente invention a pour but d'apporter un mécanisme de repose-jambes qui améliore considérablement le confort de l'utilisateur en assurant un déploiement du repose-jambes facilité.

Ce but est atteint en ce sens que le repose-jambes selon l'invention est constitué :
- d'un premier composant ayant une extrémité distale ouverte et une extrémité proximale au voisinage de laquelle il est monté pivotant sous l'assise du siège, une surface dudit premier composant, appelée à être orientée vers le haut en position déployée du repose-jambes, portant une première garniture souple ; et
- d'un second composant monté coulissant dans ledit premier composant entre une position dans laquelle il est escamoté dans ce dernier et une position dans laquelle il se projette hors dudit premier composant par l'extrémité distale de celui-ci, ledit second composant portant une seconde garniture souple sur une face appelée à être orientée vers le haut en position déployée du repose-jambes, caractérisé en ce que
ledit premier composant forme caisson,
ledit second composant forme tiroir, et
l'extrémité distale dudit tiroir est munie d'une ou plusieurs roulettes en contact avec le sol en position escamotée du repose-jambes, et qui facilite(nt) le déploiement, sous l'effet de la gravité, du repose-jambes après amorçage dudit déploiement.

A l'état escamoté, le repose-jambes selon l'invention forme un bloc compact dont la seule partie visible est la face supérieure du caisson (avec sa garniture souple) au droit du bord libre de l'assise, la totalité ou la quasi-totalité du tiroir et de l'éventuel sous-tiroir étant dissimulée à l'intérieur du caisson.

Pour faciliter le déploiement, l'extrémité distale du tiroir ou, le cas échéant, celle dudit sous-tiroir est munie d'au moins une roulette, et de préférence de deux roulettes. Ainsi l'extrémité du repose-jambes en cours de déploiement roule sur le sol, ce qui s'accompagne d'un pivotement du caisson sur le châssis du siège.

Pour ce faire, le caisson est avantageusement monté sur un cadre de fixation ayant deux montants solidaires d'une traverse, ladite traverse étant montée pivotante sur le châssis du siège et formant axe de pivotement pour ledit caisson. Pour amorcer le déploiement du repose-jambes selon l'invention, on pourrait le tirer un peu manuellement vers l'avant et, sous l'effet de la simple gravité, le sous-tiroir, s'il y en a un, s'extrairait du sous-caisson (le tiroir), puis le tiroir s'extrairait du caisson, après quoi on relèverait le repose-jambes pour le faire passer en position totalement déployée, un moyen de verrouillage/déverrouillage étant prévu pour bloquer le repose-jambes en position escamotée et en position déployée.

Dans le document WO 97/00035, à l'état escamoté, le coussin 6''' dépendant de la tige coulissante se trouve exposé à la vue et accolé au coussin 6'' dépendant du tube du repose-jambes, alors qu'à l'état déployé ces deux coussins s'écartent l'un de l'autre en laissant entre eux un vide d'une longueur sensiblement égale à celle du coussin 6''' lui-même (voir figure 1 de WO 97/00035). Il s'ensuit que les jambes de l'utilisateur ne sont pas soutenues sur toute leur longueur, ce qui est évidemment une source d'inconfort.

En outre, comme on le voit à la figure 1 de WO 97/00035, l'extrémité proximale du coussin 6''' repose, en position déployée du repose-jambes, sur l'extrémité distale du tube 6 de sorte que l'allongement maximal possible du repose-jambes est clairement égal à la distance sur laquelle peut coulisser le coussin 6'' en conservant un appui sur le tube 6, c'est-à-dire à peu près sa propre longueur qui, on le voit, représente approximativement 50% de la longueur du tube 21.

Or, la longueur de ce tube est limitée par la garde au sol de l'assise du siège, laquelle est sensiblement standard et de l'ordre de 27-30 cm.

On comprend donc que l'allongement du repose-jambes divulgué par WO 97/00035 est de l'ordre de la moitié de cette hauteur, soit d'à peu près 14 cm, et que, à l'état déployé, le repose-jambes atteint au grand maximum 45 cm.

Or, il serait souhaitable d'accroître cet allongement pour que des personnes de grande taille puissent se relaxer de façon tout à fait confortable.

Dans un mode de réalisation de l'invention, la première et la seconde garnitures souples couvrent, respectivement, ladite face du caisson et ladite face du tiroir sensiblement sur toute leur surface, et ladite seconde garniture est escamotée dans ledit caisson en même temps que ledit tiroir et vient, en position déployée du repose-jambes, dans le prolongement de ladite première garniture, sensiblement sans discontinuité.

De préférence les garnitures souples sont constituées d'un coussin, éventuellement supporté par un jeu de sangles, ou encore d'un canevas tissé de fils thermoplastiques entresoudés tel que celui commercialisé sous la marque BATYLINE. La première garniture souple peut, par exemple, être constituée d'un coussin et la seconde garniture souple d'un tel canevas.

Grâce à cette structure, la seconde garniture souple, d'une part, laisse disponible, pour la première garniture, toute la surface du caisson et, d'autre part, occupe toute la surface du tiroir. Il s'ensuit qu'en position déployée la garniture du tiroir vient se placer en bout de la garniture du caisson, sans vide inconfortable entre eux.

En outre, l'extraction du tiroir n'est pas limitée par la nécessité de conserver à la seconde garniture un appui sur la face du caisson comme ce serait le cas si la structure était semblable à celle de WO 97/00035. Il s'ensuit que l'allongement du repose-jambes peut atteindre environ 80% de la longueur du caisson ou, exprimé autrement, pratiquement deux fois la garde au sol du siège, soit environ 55 cm. Il peut même atteindre deux fois et demi la garde au sol si l'on prévoit un sous-tiroir, comme indiqué ci-dessous.

Selon une autre forme d'exécution préférée, le repose-jambes selon l'invention comporte un sous-tiroir monté coulissant dans ledit tiroir, comme le tiroir est lui-même monté coulissant dans ledit caisson, lequel tiroir forme alors sous-caisson pour le sous-tiroir.

En outre, la face dudit sous-tiroir, appelée à être orientée vers le haut en position déployée du repose-jambes, est garnie d'une troisième garniture souple sensiblement sur toute sa surface, et ladite troisième garniture souple est escamotée dans le tiroir en même temps que ledit sous-tiroir et vient, en position déployée du repose-jambes, dans le prolongement de ladite seconde garniture souple dudit tiroir, sensiblement sans discontinuité.

Dans une forme d'exécution préférée, le repose-jambes selon l'invention comporte un moyen moteur adapté à exercer, directement ou indirectement, sur le cadre précité, une poussée dans le sens du déploiement du repose-jambes et, mieux, le moyen moteur est un vérin pneumatique.

On connaît d'après WO 95/27422, un repose-jambes qui, dans la pratique, utilise un vérin électrique comme moyen moteur.

Plus précisément, le repose-jambes connu comporte, d'une part, une paire de ferrures 1 triangulaires, montées pivotantes sur le châssis du siège par un des angles des ferrures, avec interposition entre les ferrures 1 d'une plaque 9 support de coussin, et, d'autre part, une paire de coulisses 7 montées sur un axe dépendant d'un autre angle des ferrures, avec interposition d'une plaque 13 support de coussin entre les coulisses. Une bielle 17 provoque, sous l'effet d'un moyen moteur, le déploiement de la structure escamotée et inversement. L'emploi d'un vérin pneumatique n'est pas envisageable dans la mesure où un tel vérin pourrait éventuellement permettre le déploiement, mais non le ré-escamotage, du repose-jambes.

Le recours à un vérin pneumatique, par opposition à un vérin électrique, est possible, selon l'invention, en raison de la faible force nécessaire à la manoeuvre du repose-jambes. Or, d'une part, un vérin pneumatique actionné par un simple levier est considérablement moins coûteux qu'un vérin électrique et sa télécommande et, d'autre part, sur un plan psychologique, un siège muni d'un tel vérin est mieux accueilli par le consommateur, surtout jeune, qu'un vérin électrique télécommandé, les sièges mus électriquement ayant, à ce jour encore, une connotation de sièges pour handicapés. Il va de soi cependant que le vérin pourrait être un vérin électrique. Pour escamoter le repose-jambes depuis sa position déployée, l'utilisateur le déverrouille, ce qui libère le caisson, puis il exerce un léger effort avec les jambes sur le repose-jambes : il s'ensuit le pivotement du caisson sur le châssis du siège, les roulettes du tiroir ou du sous-tiroir reprenant contact avec le sol. Tandis qu'elles y roulent, le tiroir et le sous-tiroir s'escamotent dans le caisson qui reprend sa position au droit du bord de l'assise du siège, stade auquel l'utilisateur reverrouille le repose-jambes.

Si le repose-jambes comporte un vérin pneumatique, le déverrouillage et le reverrouillage en question sont ceux du vérin.

Pour faciliter l'escamotage, l'extrémité distale du tiroir et/ou, le cas échéant, celle du sous-tiroir peuvent éventuellement servir de point d'ancrage à l'une des extrémités d'un ressort de rappel dont l'autre extrémité est ancrée sur l'extrémité proximale du caisson. Ce ressort, tendu lors du déploiement du repose-jambes, tend à ramener le tiroir, et le cas échéant le sous-tiroir, en position escamotée.

Dans une forme d'exécution pratique de l'invention, la face supérieure du caisson et/ou du tiroir et/ou, le cas échéant, du sous-tiroir est ouverte et garnie d'un jeu de sangles adapté à recevoir un coussin.

Le caisson, le tiroir et l'éventuel sous-tiroir seront avantageusement réalisés en tôle, en bois ou en aluminium, le tiroir et l'éventuel sous-tiroir coulissant dans des glissières en aluminium.

L'invention sera mieux comprise à la lecture de la description suivante faite en référence aux dessins annexés dans lesquels :
- les figures 1a à 1e illustrent les phases successives du passage du repose-jambes selon l'invention, dans une première forme d'exécution, de la position totalement escamotée (figure 1a) à la position de totalement déployée (figure 1e) ;
- la figure 2 est une vue en coupe verticale, à plus grande échelle, du repose-jambes selon l'invention, dans la position de la figure 1a ;
- la figure 3 est une vue en coupe verticale, à plus grande échelle, du repose-jambes selon l'invention, dans la position de la figure 1d ;
- la figure 4 est un schéma illustrant, en perspective, le principe d'une autre forme d'exécution du repose-jambes selon l'invention, dépourvu de garnitures souples ; et
- la figure 5 est un schéma en coupe longitudinale de la forme d'exécution de la figure 4, avec garnitures souples.

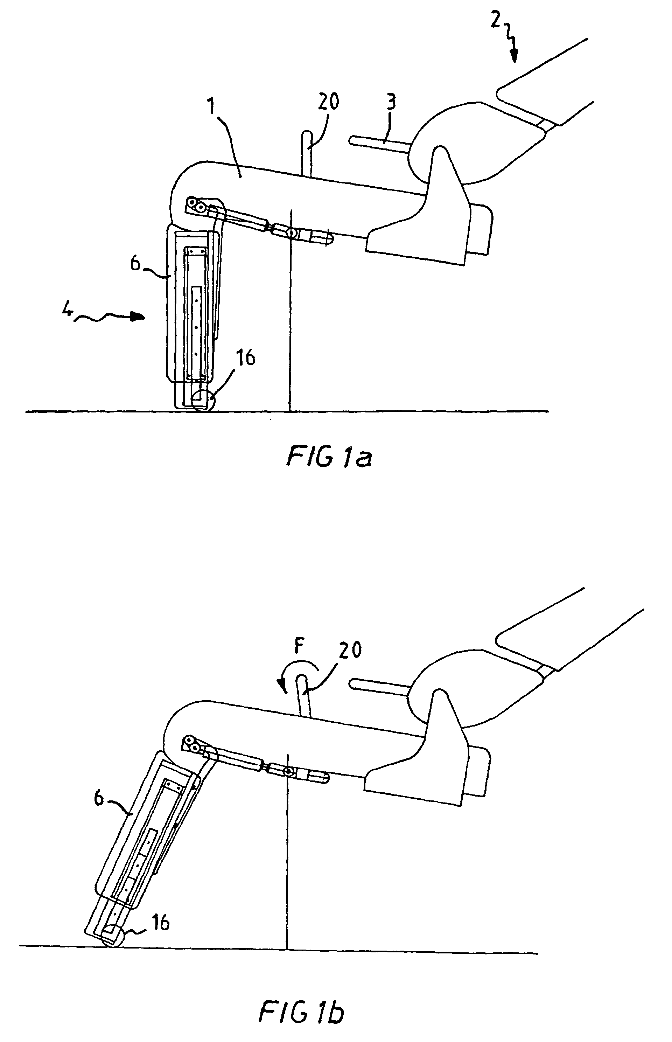

Si l'on examine les figures 1a-1d, on voit un siège comportant une assise 1, un dossier 2 et un levier 3 de commande d'inclinaison du dossier. Ce siège est muni d'un repose-jambes désigné généralement par 4 qui revêt la forme générale d'un bloc parallélépipèdique.

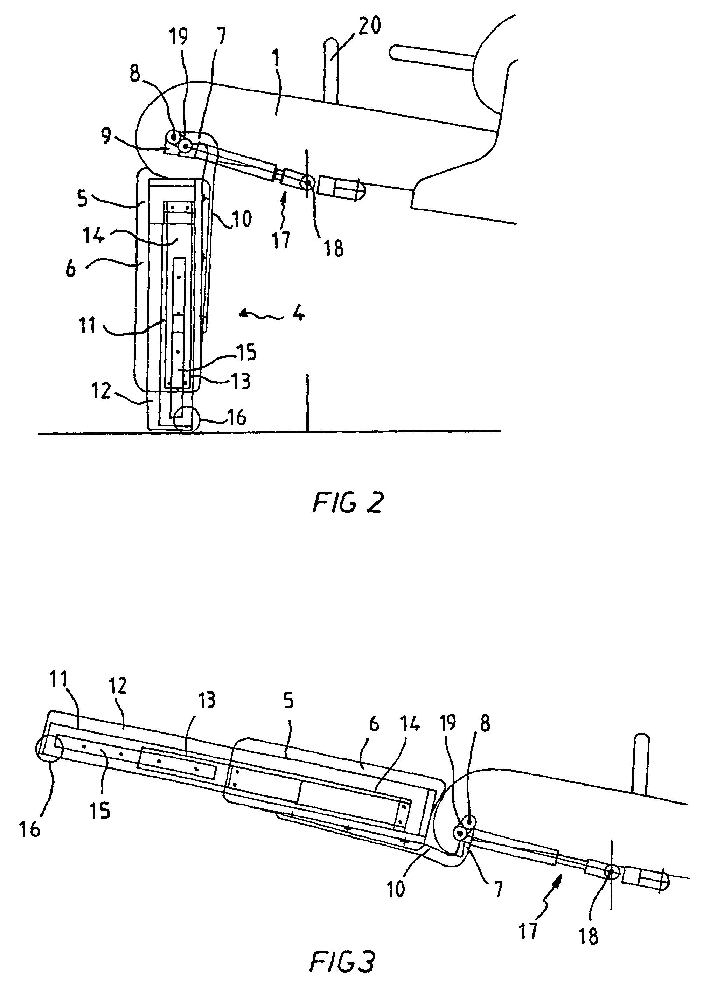

Si l'on se reporte aux figures 2 et 3, on voit que ce bloc est constitué d'un caisson 5, garni d'un coussin 6 et solidarisé à un cadre de fixation composé de deux montants en équerre à branches inégales. Les branches courtes 7 des équerres sont solidarisées à une traverse 8 montée pivotante sur le châssis 9 du siège. Les branches longues sont, de leur côté, solidarisées à la face inférieure du caisson 5 de sorte que le caisson peut pivoter autour de l'axe que forme la traverse 8.

A l'intérieur du caisson 5 est logé un tiroir 11 dont la face supérieure est garnie d'un coussin 12 et qui est monté coulissant dans le caisson 5. A cette fin, il est prévu un chariot 13 dont les faces latérales coopèrent avec une glissière 14, le chariot 13 lui-même recevant, coulissant, des rails 15 fixés aux faces latérales du tiroir 11. Une paire de roulettes 16 est fixée en bout du tiroir 11.

Comme il ressort en outre des figures, un vérin pneumatique 17 articulé en 18 sous l'assise 1 du siège est monté pivotant à l'une des extrémités d'une patte 19 solidarisée, à son autre extrémité, à la traverse 8.

Un levier 20 commande, d'une manière connue en soi, le déploiement du vérin 17.

Le fonctionnement du repose-jambes selon l'invention est le suivant :

Lorsqu'il n'est pas utilisé, le repose-jambes occupe la position représentée à la figure 1a.

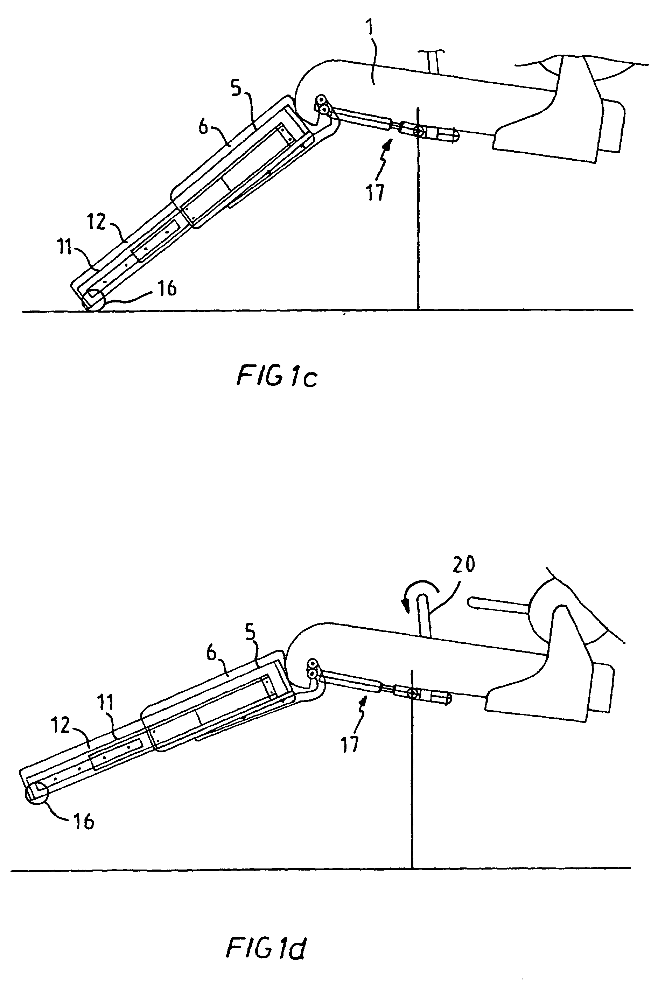

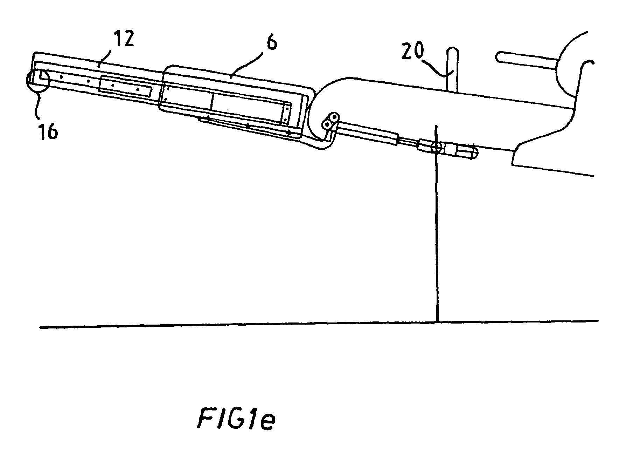

Pour le déployer, l'utilisateur déverrouille le vérin 17 en abaissant le levier 20, selon la flèche F, vérin dont la tige sort en provoquant le pivotement du cadre 7,10 autour de la traverse 8, levier qu'il maintient abaissé pendant tout le mouvement souhaité. Sous l'effet combiné de la poussée du vérin et de la gravité, le repose-jambes se déploie (figure 1b), en roulant au sol sur ses roulettes 16. Ce déploiement se poursuit de lui-même jusque dans la position représentée à la figure 1c. A ce stade, la poussée exercée par le vérin 7 relève le repose-jambes et le fait passer dans la position représentée à la figure 1d. L'utilisateur bloque alors le repose-jambes en position en lâchant le levier 20. Il est bien entendu que l'utilisateur peut relâcher le levier 20 avant que le repose-jambes ait atteint la position de la figure 1e, s'il souhaite que le repose-jambes occupe une position intermédiaire entre celle de la figure 1d et celle de la figure 1e.

Pour éviter que le tiroir, et le cas échéant le sous-tiroir, s'escamotent intempestivement alors que le repose-jambes est en position déployée, il est prévu, d'une manière connue en soi, un ou plusieurs couples d'organes mâles et femelles venant, par déformation élastique de l'élément femelle, en prise réciproque lorsqu'ils se trouvent en vis-à-vis, et qui sont désolidarisables par une nouvelle déformation de l'élément femelle lorsque le repose-jambes est replié, en surmontant le point dur que représentent ces organes en prise.

Pour ré-escamoter le repose-jambes, l'utilisateur déverrouille le vérin 17 et exerce une pression, au moyen de ses jambes, sur le repose-jambes. Celui-ci pivote autour de la traverse 8 et les roulettes 16 reprennent contact avec le sol. Il suffit alors à l'utilisateur de repousser l'ensemble d'une pression du talon et de reverrouiller le vérin 7 une fois le repose-jambes revenu dans la position représentée à la figure 1a.

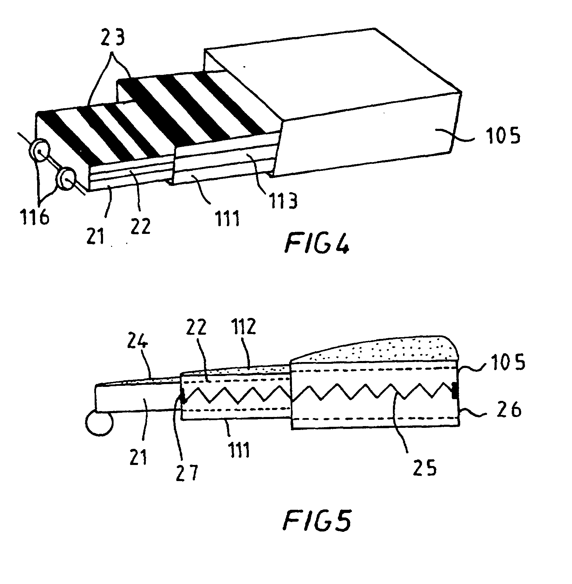

La forme d'exécution discutée ci-dessus comporte deux tiroirs. Elle pourrait cependant en comporter trois comme le montre la figure 4. Dans cette figure, le bloc comprend, comme précédemment, un caisson 105 et un tiroir 111, mais ce dernier sert lui-même de caisson (sous-caisson) à un sous-tiroir muni de roulettes 116. Des rails, respectivement 113 et 22, sont prévus sur les faces latérales correspondantes du tiroir 111 et du sous-tiroir 21 et qui viennent en prise avec des moyens coopérants prévus sur la face interne en vis-à-vis, respectivement, du caisson 105 et du sous-caisson 111.

Cette disposition permet d'augmenter encore la longueur du repose-jambes.

Comme il ressort de la figure 4, la face supérieure du tiroir et celle du sous-tiroir sont ouvertes et tendues de sangles 23 adaptées à recevoir les coussins 112 et 24. De telles sangles offrent un appui plus souple au niveau sensible de la partie inférieure du mollet et de la cheville, lesquels reposeront sur des coussins nécessairement minces compte tenu de la nécessité de les rentrer dans les caisson et sous-caisson. En variante, les sangles et leur coussin pourraient être remplacés par un canevas tendu tel que celui disponible dans le commerce sous la marque BATYLINE.

Comme il ressort en outre de la figure 5, un ressort de rappel 25 peut être ancré, par une de ses extrémités, sur la face distale 26 du caisson 105 et, par son autre extrémité, sur la face distale 27 du sous-tiroir 21. Ce ressort, facultatif, facilite le retour du sous-tiroir 11 dans le tiroir/sous-caisson 111 et celui du tiroir 111 dans le caisson 105.

Il ressort de la description qui précède que la structure du repose-jambes selon l'invention est simple et robuste et économique, qu'elle est d'une utilisation facile, et qu'elle offre un confort accru à l'utilisateur.

## Revendications

1. Repose-jambes adapté à être monté sous l'assise (1) d'un siège comportant un châssis de siège et à passer d'une position escamotée dans laquelle ledit repose-jambes permet à l'utilisateur du siège de poser les pieds au sol à une position déployée dans laquelle il s'étend dans le prolongement de l'assise pour recevoir les jambes de l'utilisateur, ledit repose-jambes étant constitué :
- d'un premier composant (5 ; 105) ayant une extrémité distale ouverte et une extrémité proximale au voisinage de laquelle il est monté pivotant sous l'assise (1) du siège, une surface dudit premier composant, appelée à être orientée vers le haut en position déployée du repose-jambes, portant une première garniture souple (6) ; et
- d'un second composant (11 ; 111) monté coulissant dans ledit premier composant (5 ; 105) entre une position dans laquelle il est escamoté dans ce dernier et une position dans laquelle il se projette hors dudit premier composant par l'extrémité distale de celui-ci, ledit second composant (11 ; 111) portant une seconde garniture souple (12 ; 112) sur une face appelée à être orientée vers le haut en position déployée du repose-jambes, **caractérisé en ce que** :
- ledit premier composant (5 ; 105) forme caisson,
- ledit second composant (11 ; 111) forme tiroir,
- la première et la seconde garnitures souples (6 ; 12 ; 112) couvrent, respectivement, ladite face du caisson et ladite face du tiroir sensiblement sur toute leur surface, et
- ladite seconde garniture souple (12 ; 112) est escamotée dans ledit caisson (5 ; 105) en même temps que ledit tiroir (11 ; 111) et vient, en position déployée du repose-jambes, dans le prolongement de ladite première garniture souple (6), sensiblement sans discontinuité,
- l'extrémité distale dudit tiroir (11) est munie d'une ou plusieurs roulettes (16) en contact avec le sol en position escamotée du repose-jambes et qui, sous l'effet de la gravité, facilite(nt) le déploiement, du repose-jambes après amorçage dudit déploiement.

2. Repose-jambes selon la revendication 1, **caractérisé en ce qu'**il comporte un sous-tiroir (21) monté coulissant dans ledit tiroir (111), comme le tiroir (111) est lui-même monté coulissant dans ledit caisson (105), ledit tiroir (111) formant alors sous-caisson pour le sous-tiroir (21) et la ou lesdites roulettes (116) équipant, dans ce cas, l'extrémité distale du sous-tiroir (21) au lieu de l'extrémité distale du tiroir (111).

3. Repose-jambes selon la revendication 2, **caractérisé en ce qu'**une face dudit sous-tiroir (21), appelée à être orientée vers le haut en position déployée du repose-jambes, est garnie d'une troisième garniture souple (24) sensiblement sur toute sa surface, et **en ce que** ladite troisième garniture souple (24) est escamotée dans le tiroir (111) en même temps que ledit sous-tiroir (21) et vient, en position déployée du repose-jambes, dans le prolongement de la seconde garniture souple (112) dudit tiroir (111), sensiblement sans discontinuité.

4. Repose-jambes selon l'une quelconque des revendications 1 à 3, **caractérisé en ce que** ledit caisson (5) est monté sur un cadre de fixation ayant deux montants solidaires d'une traverse (8), ladite traverse étant montée pivotante sur le châssis du siège et formant axe de pivotement pour ledit caisson (5) et **en ce qu'**un moyen moteur (17) est adapté à exercer, directement ou indirectement, sur ledit cadre, une poussée dans le sens du déploiement du repose-jambes.

5. Repose-jambes selon la revendication 4, **caractérisé en ce que** ledit moyen moteur est un vérin pneumatique (17).

## Patentansprüche

1. Beinstütze, die dafür ausgelegt ist, unter der Sitzfläche (1) eines ein Sitzgestell aufweisenden Sitzes montiert zu werden und von einer eingezogenen Stellung, in der die Beinstütze dem Benutzer des Sitzes gestattet, die Füße auf dem Boden aufzusetzen, in eine ausgefahrene Stellung überzugehen, in der sie sich in der Verlängerung der Sitzfläche erstreckt, um die Beine des Benutzers aufzunehmen, wobei diese Beinstütze aus folgendem besteht:
- einem ersten Bauelement (5; 105) mit einem offenen distalen Ende und einem proximalen Ende, in dessen Nähe es unter der Sitzfläche (1) des Sitzes angelenkt ist, wobei eine Seite dieses ersten Bauelements, die dazu vorgesehen ist, in der ausgefahrenen Stellung der Beinstütze nach oben gerichtet zu sein, einen ersten weichen Belag (6) trägt; und
- einem zweiten Bauelement (11; 111), das in dem ersten Bauelement (5; 105) zwischen einer Stellung, in der es in dieses eingezogen ist, und einer zweiten Stellung verschiebbar montiert ist, in der es aus diesem ersten Bauelement an dessen distalen Ende herausragt, wobei das zweite Bauelement (11; 111) auf einer Seite, die dazu vorgesehen ist, in der ausgefahrenen Stellung der Beinstütze nach oben gerichtet zu sein, einen zweiten weichen Belag (12; 112) trägt, **dadurch gekennzeichnet, dass**:
- das erste Bauelement (5; 105) einen Kasten bildet,
- das zweite Bauelement (11; 111) einen Einschub bildet,
- der erste und der zweite weiche Belag (6; 12; 112) diese Seite des Kastens bzw. diese Seite des Einschubs im wesentlichen über ihre ganze Fläche bedecken, und
- der zweite weiche Belag (12; 112) gleichzeitig mit dem Einschub (11; 111) in den Kasten (5; 105) einezogen wird und in ausgefahrener Stellung der Beinstütze im wesentlichen ohne Unterbrechung in die Verlängerung des ersten weichen Belags (6) gelangt,
- das distale Ende des Einschubs (11) mit einer oder mehreren Rollen (16) versehen ist, die in der eingezogenen Stellung der Beinstütze mit dem Boden in Kontakt sind und die unter der Wirkung der Schwerkraft das Ausfahren der Beinstütze nach dem Beginn dieses Ausfahrens erleichtern.

2. Beinstütze nach Anspruch 1, **dadurch gekennzeichnet, dass** sie einen Untereinschub (21) aufweist, der in dem Einschub (111) verschiebbar montiert ist, da der Einschub (111) seinerseits in dem Kasten (105) verschiebbar montiert ist, wobei dieser Einschub (111) hierbei einen Unterkasten für den Untereinschub (21) bildet und die Rolle bzw. Rollen (116) in diesem Fall anstelle am distalen Ende des Einschubs (111) am distalen Ende des Untereinschubs (21) angeordnet sind.

3. Beinstütze nach Anspruch 2, **dadurch gekennzeichnet, dass** eine Seite des Untereinschubs (21), die dazu vorgesehen ist, in der ausgefahrenen Stellung der Beinstütze nach oben gerichtet zu sein, im wesentlichen auf ihrer ganzen Fläche mit einem dritten weichen Belag (24) bedeckt ist, und dass der dritte weiche Belag (24) gleichzeitig mit dem Untereinschub (21) in den Einschub (111) eingezogen wird und in der ausgefahrenen Stellung der Beinstütze im wesentlichen ohne Unterbrechung in die Verlängerung des zweiten weichen Belags (112) des Einschubs (111) gelangt.

4. Beinstütze nach einem der Ansprüche 1 bis 3, **dadurch gekennzeichnet, dass** der Kasten (5) an einem Befestigungsrahmen montiert ist, der zwei mit einem Querelement (8) fest verbundene Ständer aufweist, wobei das Querelement an dem Gestell des Sitzes angelenkt ist und eine Schwenkachse für den Kasten (5) bildet, und dass ein Antriebsmittel (17) dafür ausgelegt ist, direkt oder indirekt auf den Rahmen einen Schub in der Richtung des Ausfahrens der Beinstütze auszuüben.

5. Beinstütze nach Anspruch 4, **dadurch gekennzeichnet, dass** das Antriebsmittel ein Pneumatikzylinder (17) ist.

## Claims

1. Leg-rest adapted to be mounted under the seat (1) of a chair having a seat frame and to move from a stowed position in which the said leg-rest enables the user of the chair to rest his feet on the ground to a deployed position in which it extends in the extension of the seat to receive the user's legs, the said leg-rest consisting of:
- a first component (5; 105) having an open distal end and a proximal end in the vicinity of which it is mounted pivotably under the seat (1) of the chair, one surface of the said first component, arranged to be orientated upwards in the deployed position of the leg-rest, carrying a first soft cover (6); and
- a second component (11; 111) mounted in the said first component (5; 105) so that it can slide between a position in which it is stowed into the first component and a position in which it projects from the distal end of the said first component, the said second component (11; 111) carrying a second soft cover (12; 112) on one face arranged to be orientated upwards in the deployed position of the leg-rest, **characterized in that**:
- the said first component (5; 105) forms a box,
- the said second component (11; 111) forms a drawer,
- the first and second soft covers (6; 12; 112) cover, respectively, the said face of the box and the said face of the drawer, over their whole surfaces, and
- the said second soft cover (12; 112) is stowed into the said box (5; 105) at the same time as the said drawer (11; 111), and, in the deployed position of the leg-rest, forms an extension of the said first soft cover (6), substantially without any discontinuity,
- the distal end of the said drawer (11) is provided with one or more castors (16), which are in contact with the ground in the stowed position of the leg-rest, and which, under the effect of gravity, facilitate the deployment of the leg-rest after the said deployment has commenced.

2. Leg-rest according to Claim 1, **characterized in that** it comprises a sub-drawer (21) mounted slidably in the said drawer (111), in the same way that the drawer (111) is itself mounted slidably in the said box (105), the said drawer (111) forming a sub-box for the sub-drawer (21) in this case, and the said castor or castors (116) being fitted, in this case, to the distal end of the sub-drawer (21) rather than to the distal end of the drawer (111).

3. Leg-rest according to Claim 2, **characterized in that** one face of the said sub-drawer (21), arranged to be orientated upwards in the deployed position of the leg-rest, is covered with a third soft cover (24) substantially over the whole of its surface, and **in that** the said third soft cover (24) is stowed into the drawer (111) at the same time as the said sub-drawer (21), and, in the deployed position of the leg-rest, forms an extension of the second soft cover (112) of the said drawer (111), substantially without any discontinuity.

4. Leg-rest according to any one of Claims 1 to 3, **characterized in that** the said box (5) is mounted on a fixing frame having two uprights fixed to a cross-piece (8), the said cross-piece being mounted pivotably on the frame of the chair and forming a pivoting axis for the said box (5), and **in that** a motor means (17) is adapted to exert a direct or indirect force on the said frame in the direction of the deployment of the leg-rest.

5. Leg-rest according to Claim 4, **characterized in that** the said motor means is an air jack (17).
